# EUROPÄISCHE PATENTSCHRIFT

(11) **EP 2 491 725 B1**
(45) Veröffentlichungstag und Bekanntmachung des Hinweises auf die Patenterteilung: **27.08.2014**
(21) Anmeldenummer: 10776286.6
(22) Anmeldetag: 05.10.2010
(51) Int. Cl.: H04Q 11/00, G02F 1/35

(54) **VERFAHREN ZUR VERZÖGERUNG VON OPTISCHEN PULSEN**
METHOD FOR DELAYING OPTICAL PULSES
PROCÉDÉ POUR RETARDER DES IMPULSIONS OPTIQUES

(30) Priorität: 21.10.2009 DE 102009050051
(43) Veröffentlichungstag der Anmeldung: 29.08.2012
(73) Patentinhaber: Deutsche Telekom AG, 53113 Bonn (DE)
(72) Erfinder: JAMSHIDI, Kambiz, 04277 Leipzig (DE); SCHNEIDER, Thomas, 14552 Michendorf OT Wilhelmshorst (DE)
(74) Vertreter: Braun-Dullaeus, Karl-Ulrich
(86) Internationale Anmeldenummer: PCT/DE2010/001174
(87) Internationale Veröffentlichungsnummer: WO 2011/047657

(56) Entgegenhaltungen:
- STEFAN PREUSSLER ET AL: "Quasi-Light-Storage based on time-frequency coherence", OPTICS EXPRESS, Bd. 17, Nr. 18, 31. August 2009 (2009-08-31), Seiten 15790-15798, XP002618946, DOI: 10.1364/OE.17.015790 in der Anmeldung erwähnt
- KAMBIZ JAMSHIDI ET AL: "A proposal for a Tunable Light Storage Method Based on Quasi-Light-Storage and Frequency-to-Time Conversion", PHOTONICS IN SWITCHING (PS), OSA TECHNICAL DIGEST (CD) (OPTICAL SOCIETY OF AMERICA, 2010), 25. Juli 2010 (2010-07-25), XP002618947, Monterey, CA, USA

## Beschreibung

Die vorliegende Erfindung betrifft ein Verfahren zur Verzögerung einzelner Lichtpulse in einem Wellenleiter.

Die Verzögerung und damit letztendlich auch die Speicherung von Lichtpulsen hat viele interessante und wichtige Anwendungen. Insbesondere ist die Verzögerung optischer Pulse, Pakete oder Bursts in sogenannten optischen Puffern ein Schlüsselelement bei der Realisierung optischer Netzwerke. Gleichzeitig kann eine Verzögerung die Grundlage für den Aufbau optischer Speicher sein. Der Einsatz optischer Puffer ist auch aus der Verarbeitung von Mikrowellensignalen, der zeitaufgelösten Spektroskopie, der nichtlinearen Optik, der optischen Kohärenz-Tomographie und von phasengesteuerten Antennen bekannt.

Es ist bekannt, als optische Pufferelemente einfache Verzögerungsschleifen einzusetzen. Allerdings erlauben diese lediglich Verzögerungen von Vielfachen der Umlaufzeit in der Schleife. Zudem wurden andere Mechanismen zur Speicherung respektive Verzögerung optischer Pulse vorgeschlagen. Diese basieren beispielsweise auf der Reflexion an einem Gitter, der Verzögerung in Resonatorstrukturen und der Verzögerung in optischen Wellenleitern durch Wellenlängenkonversion und anschließender Dispersion. In den letzten Jahren wurden auch so genannte "Slow Light" - Ansätze verfolgt, bei denen die Gruppengeschwindigkeit der Pulse in einem Wellenleiter künstlich verändert wird, wobei dazu meist die stimulierte Brillouin Streuung genutzt wird.

Generell können die bekannten Methoden in zwei Kategorien eingeteilt werden. In der ersten wird die Verlängerung des Ausbreitungsmediums zur Verzögerung der Pulse genutzt. In diese Kategorie gehören die optischen Verzögerungsstrecken und Faserschleifen. In der zweiten Kategorie wird das Licht künstlich verlangsamt. Darunter fallen die Slow-Light Systeme, die sich besondere Materialstrukturen oder Resonatoranordnungen zu Nutze machen. Beide Kategorien haben jedoch ihre Vor- und Nachteile im Hinblick auf die maximale Verzögerungszeit, den Grad an Verzerrungen des Pulses, die Geschwindigkeit der Änderung und die mögliche Kontrolle des Systems, sowie deren struktureller Komplexität.

Zudem ist eine andere Methode der Verzögerung bekannt, die auf dem Zusammenhang zwischen der Zeit- und Frequenzrepräsentation von Signalen beruht. Im Gegensatz zu den anderen Methoden bietet diese hohe Verzögerungszeiten, die einfach und stufenlos einstellbar sind. Diese als "Quasi-Lichtspeicherung" bezeichnete Technik ist in der Lage, optische Pakete bis zu 100 ns zu speichern. Ein wesentlicher Nachteil des Verfahrens ist jedoch, dass es auf der Brillouin Streuung in optischen Fasern beruht und daher ein auf diesem Verfahren beruhender optischer Speicher relativ große Abmessungen aufweist und schwerlich integrierbar ist.

Die Aufgabe der vorliegenden Erfindung liegt nunmehr darin, ein mit einfachen Mitteln kostengünstig umzusetzendes Verfahren zur Verzögerung von Lichtpulsen vorzuschlagen, das starke Verzögerungen bei geringem baulichem Aufwand bietet. Zudem ist es Aufgabe der Erfindung, ein System zur Umsetzung des Verfahrens zu schaffen.

Diese Aufgaben werden durch ein Verfahren mit den kennzeichnenden Merkmalen des Anspruchs 1 und ein System nach Anspruch 4 gelöst. Vorteilhafte Ausgestaltungen sind in den jeweiligen Unteransprüchen genannt.

Der wesentliche Grundgedanke der Erfindung liegt in einer Transformation des Spektrums des zu verzögernden optischen Pulses vom Frequenzbereich in den Zeitbereich mittels einer starken Dispersion. In dem Zeitbereich werden Frequenzen extrahiert bevor die Frequenzanteile wiederum mittels einer starken Dispersion mit entgegengesetztem Vorzeichen in den Frequenzbereich zurück transformiert werden. Da dann nur noch äquidistante Frequenzanteile vorliegen, besteht die am Ende vorliegende Ausgangsfunktion aus zeitlich verzögerten Kopien des Eingangssignals.

Eine einzelne der verzögerten Kopien lässt sich im Zeitbereich mittels einer Art Schalter extrahieren. Dabei manifestiert sich das Verfahren darin, dass der Lichtpuls zur Aufspaltung der Frequenzanteile einem Element mit starker Dispersion ausgesetzt wird, dass Frequenzanteile ausgewählt und extrahiert werden und dass die ausgewählten Frequenzanteile einer starken Dispersion umgekehrten Vorzeichens ausgesetzt werden, wobei der so erzeugte Lichtpuls eine verzögerte Kopie des ursprünglichen Lichtpulses ist.

Ein ähnliches Vorgehen wurde in S. Preussler et al. "Quasi light storage based on time frequency coherence", August 2009, Vol. 17, No. 18 / Optics Express 15790 beschrieben. Demnach müssen die Frequenzanteile besonders schmalbandig im Fequenzbereich aus dem Pulsspektrum mittels einer stimulierten Brillouin Streuung in einer optischen Faser extrahiert werden. Die dazu notwendige Faser muss jedoch lang sein und lässt sich nicht auf einem Chip unterbringen.

Die Grundidee des erfindungsgemäßen Verfahrens beruht also auf der Transformation des Spektrums des optischen Signals in den Zeitbereich mit Hilfe einer starken Dispersion. Die einzelnen zu extrahierenden Frequenzanteile liegen dann nicht, wie bei dem Verfahren nach Preussler et al., gleichzeitig, sondern zeitlich nacheinander vor, so dass die Frequenzen durch einen Schalter im Zeitbereich einfach extrahiert werden können.

Die erfindungsgemäße Verzögerung macht sich somit den Zusammenhang zwischen Zeitbereich und Frequenzbereich zunutze, wie er über die FourierTransformation definiert ist. Dabei hat ein einzelnes optisches Paket im Zeitbereich ein kontinuierliches Spektrum. Im Frequenzbereich sind somit alle Frequenzanteile unter einer Einfüllenden vorhanden, wobei die Einhüllende von der Form des Pulses im Zeitbereich bestimmt wird. Die erfindungsgemäße Vorgehensweise leitet sich nun aus dem Gedanken ab, dass bei einem aus einer zeitlichen Abfolge identischer optischer Pakete bestehenden Signal das Spektrum zwar wieder dieselbe Einhüllende aufweist, wobei allerdings nicht mehr alle Frequenzen im Spektrum vorhanden sind. Das Spektrum weist in diesem Fall nur noch einzelne äquidistante Frequenzkomponenten auf, deren Frequenzabstand sich aus der inversen Zeit zwischen den identischen Paketen im Zeitbereich ergibt.

Der erfindungsgemäße Gedanke liegt demnach darin, aus einem einzelnen optischen Signal verzögerte Kopien dieses Signals dadurch zu erzeugen, dass aus dem Spektrum dieses Signals äquidistante Frequenzanteile extrahiert werden. Die einzelne verzögerte Kopie ergibt sich dann durch eine zeitliche Extraktion mittels eines Schalters.

Der wesentliche Vorteil des erfindungsgemäßen Verfahrens liegt in der guten Integrierbarkeit. Ein auf diesem Verfahren beruhender optischer Speicher weist besonders kleine Abmessungen auf und kann auf einem Chip integriert werden. Damit ist die wesentliche Voraussetzung geschaffen, dieses Verfahren beispielsweise für optische Computer, die optische Übertragung von Datensignaten innerhalb von Computern oder für optische Netzwerkknoten kleiner Abmessungen einzusetzen. Das Verfahren ist einfach und flexibel. Vor allem lässt es sich mit Standardkomponenten der optischen Nachrichtentechnik realisieren. Zudem benötigt es zu seiner Realisierung nur relativ wenig optische Leistung, die durch einfache Laserdioden geliefert werden kann. Ein auf diesem Verfahren beruhendes System ist daher preiswert und zuverlässig.

Ein weiterer Vorteil ist, dass das Verfahren keine Beschränkung auf eine bestimmte Bandbreite aufweist, so dass auch hochbitratige Datensignale verzögert respektive gespeichert werden können. Gleichzeitig ist das Verfahren vollständig transparent für das zu verzögernde Signal, was bedeutet, dass die Verzögerung unabhängig von der Eingangsbitrate und dem Modulationsformat des optischen Signals ist. Die erfindungsgemäße Vorgehensweise verändert auch nicht die Phase des optischen Signals, so dass sie für so genannte kohärente Übertragungssysteme eingesetzt werden kann, bei denen die Phase des Signals moduliert wird.

Die Erfindung wird anhand eines Ausführungsbeispieles entsprechend der Figuren 1 bis 5 näher erklärt. Es zeigen:
- **Figur 1**: ein Blockdiagramm eines erfindungsgemäßen Systems und
- **Figuren 2 bis 5**: Spektren an verschiedenen Punkten des Systems.

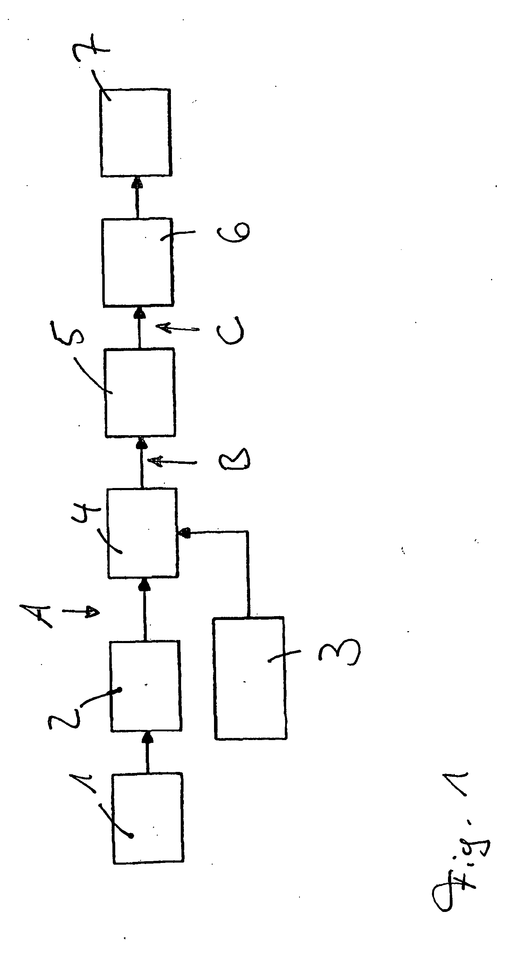

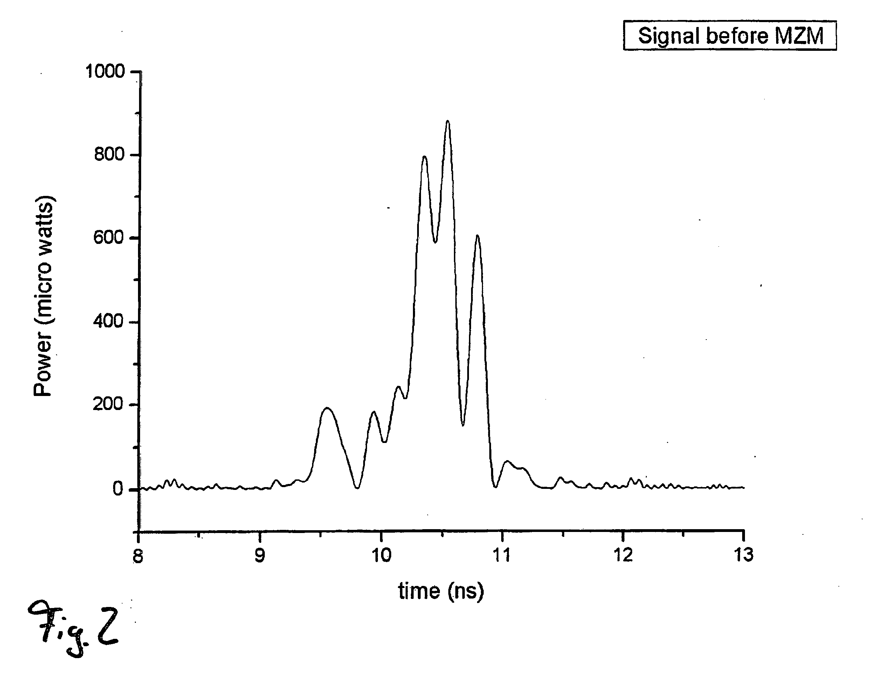

In Figur 1 ist ein Blockdiagramm eines erfindungsgemäßen Systems zur Umsetzung des Verfahrens gezeigt. Das zu speichernde Eingangssignal 1 besteht aus mehreren Bits, die ein optisches Paket in Form eines Bursts bilden. Das erste Element 2 zeichnet sich durch seine große Dispersion aus, so dass sich darin unterschiedliche Frequenzen mit unterschiedlicher Geschwindigkeit ausbreiten. Hier erfolgt somit eine Transformation des Signals vom Frequenzbereich in den Zeitbereich. Element 2 kann ein gechirptes Faser-Bragg Gitter, ein Arrayed Waveguide-Gitter, ein virtually imaged phase array, ein 4f Linsen-Gitterpaar mit einem Flüssigkristall Modulator oder einer Phasenmaske im Zentrum oder ein optisches Etalon sein. Am Ausgang von Element 2 liegen die unterschiedlichen Frequenzanteile des optischen Eingangssignals zu unterschiedlichen Zeiten vor. Das Ausgangssignal an der Position A ist in Figur 2 dargestellt, wobei die Zeit in ns gegen die Amplitude des Signals dargestellt ist.

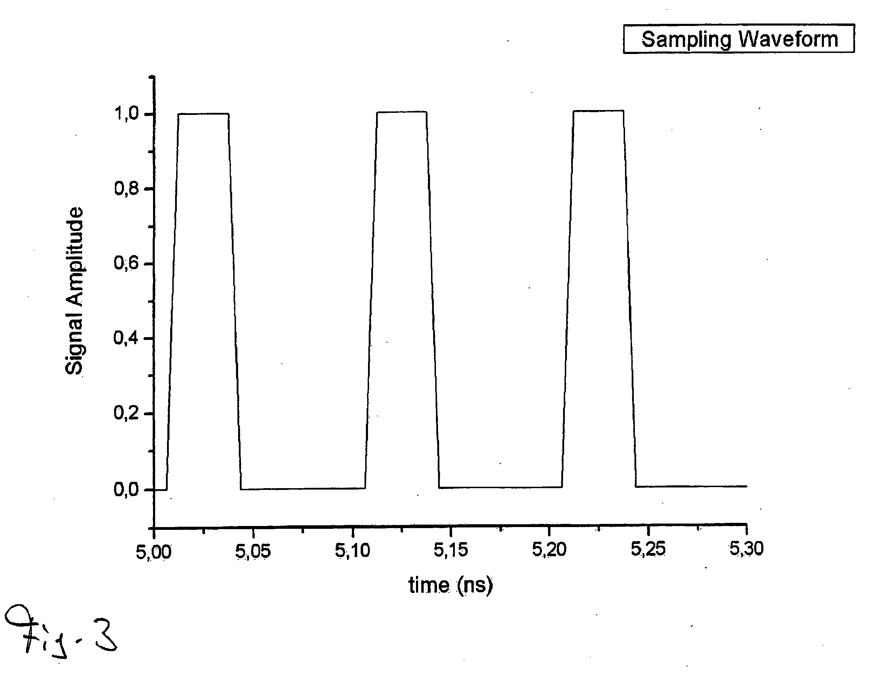

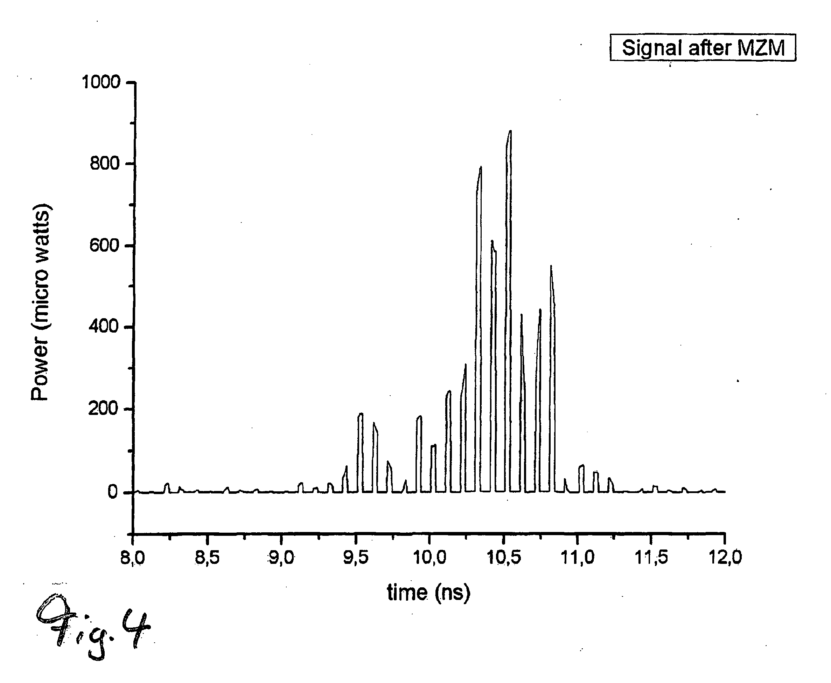

Der Signalgenerator 3 erzeugt ein periodisches elektrisches Signal, das die einzelnen zu extrahierenden Frequenzen des durch die Dispersion in den Zeitbereich transformierten Signals bestimmt. Das Signal des Generators 3 ist in Figur 3 dargestellt. Mit dem elektrischen Signal wird als drittes Element 4 ein Modulator, insbesondere ein Mach-Zehnder, angesteuert, der das Signal des Signalgenerators mit dem transformierten optischen Signal multipliziert und dadurch die einzelnen Frequenzanteile extrahiert. Mit dem elektrischen Signal bewerkstelligt der Modulator somit als Schalter das Herausschneiden der Frequenzen. Das nach dem Mach-Zehnder an Position B vorliegende Zeitbereichssignal vor der entgegengesetzten Dispersion ist in Figur 4 dargestellt. Da das Spektrum durch die erste Dispersion in den Zeitbereich transformiert wurde, entspricht dieses Zeitsignal den einzelnen Frequenzen. Jeder Peak stellt eine andere Frequenz dar.

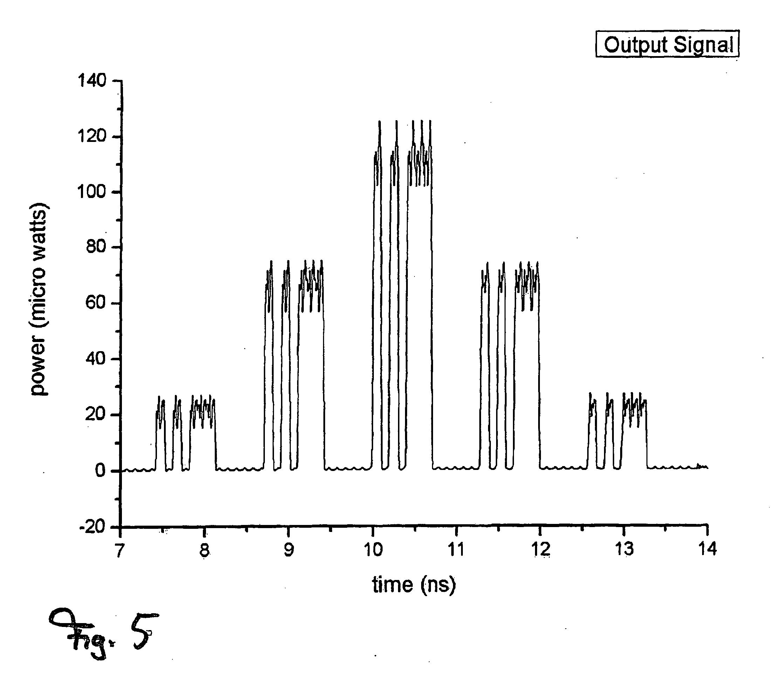

Das vierte Element 5 ist wiederum ein Medium mit einer hohen Dispersion, die genau so groß ist, wie die Dispersion des ersten Elementes 2 aber ein entgegengesetztes Vorzeichen hat. Hierfür können die gleichen Elemente wie für das erste Element 2 genutzt werden. Dieses Element transformiert die extrahierten Frequenzanteile wieder zurück, so das eine Reihe von Kopien des Ursprungspakets gebildet werden. Das entsprechende Ausgangssignal an der Position C ist in Figur 5 dargestellt. Darin zu sehen sind die einzelnen Kopien des Eingangspakets. Aus diesem Signal kann dann mittels eines Schaltelementes diejenige Kopie des Eingangssignals extrahiert werden, welche die gewünschte Verzögerung aufweist.

Eine einfache Grob- und Feinabstimmung der Verzögerungszeit lässt sich durch eine Änderung des elektrischen Signals im zweiten Element 3 und eine Verschiebung der Fensterfunktion in einem Element 6 erzielen. Ist die Leistung der Ausgangssignale zu gering, so lassen sich die einzelnen Frequenzanteile durch einen optischen Verstärker, wie z.B. einem optischen Halbleiterverstärker zwischen den Elementen 4 und 5 verstärken. Alle Elemente der hier vorgeschlagenen Methode können auf kleinstem Raum auf einem Chip implementiert werden, so dass äußerst kleine Abmessungen des optischen Speichers möglich sind. Der Ausgang ist mit dem Element 7 dargestellt.

Eine Erhöhung der maximal möglichen Verzögerung ist durch eine Änderung der Elemente 3 und 4 möglich. Wird die Auswahl der Frequenzen nicht elektrisch sondern optisch vorgenommen, so lassen sich schmalere Frequenzanteile extrahieren. In diesem Fall wird der Block 3 durch einen optischen Pulsgenerator gebildet, wozu sich ein modengelockter Laser einsetzen lässt. Element 4 wird durch ein optisches Element gebildet, das in der Lage ist die Pulse des Pulsgenerators mit dem optischen Signal zu multiplizieren. Dies kann z.B. ein SOA oder ein Wellenleiter mit Filter sein. In diesen Elementen kann beispielsweise die Kreuzphasenmodulation oder die Intrakanal-Kreuzphasenmodulation als physikalische Methode zur Multiplikation ausgenutzt werden.

## Patentansprüche

1. Verfahren zur Verzögerung eines einzelnen Lichtpulses oder eines Paketes von Lichtpulsen in einem System aufweisend einen Wellenleiter,
**dadurch gekennzeichnet,**
**dass** der Lichtpuls bzw. die Lichtpulse zur Aufspaltung der Frequenzanteile einem Element mit starker Dispersion (2) ausgesetzt wird bzw. werden, dass ein Frequenzanteil ausgewählt und extrahiert wird und dass der ausgewählte Frequenzanteil einem weiteren Element (5) mit einer starken Dispersion umgekehrten Vorzeichens ausgesetzt wird, wobei nach Durchlaufen des weiteren Elementes der so erzeugte Lichtpuls bzw. die Lichtpulse eine verzögerte Kopie des ursprünglichen Lichtpulses ist bzw. der ursprünglichen Lichtpulse sind.

2. Verfahren nach Anspruch 1,
wobei der Lichtpuls bzw. die Lichtpulse von dem Element mit starker Dispersion vom Frequenzbereich in den Zeitbereich transformiert wird bzw. werden, wobei im Zeitbereich der Frequenzanteil ausgewählt wird.

3. Verfahren nach Anspruch 1 oder 2, wobei
der Frequenzanteil im Zeitbereich mittels eines Schaltelementes, insbesondere mittels eines Modulators, extrahiert wird.

4. Verfahren nach einem der vorherigen Ansprüche, wobei
eine Abstimmung der Verzögerungszeit durch eine Änderung des elektrischen Signals in einem Signalgenerator (3) und durch eine Verschiebung der Fensterfunktion in einem Element (6) erzielt wird.

5. Verfahren nach einem der vorherigen Ansprüche, wobei der
Frequenzanteil durch einen optischen Verstärker, insbesondere einem optischen Halbleiterverstärker, zwischen einem Schaltelement (4) und dem weiteren Element (5) verstärkt werden.

6. System zur Durchführung des Verfahrens nach einem der vorherigen Ansprüche, dass
ein erstes Element (2) mit einer starken Dispersion zur Transformation des Signals vom Frequenzbereich in den Zeitbereich, ein Schaltelement (4) zum Herausschneiden von Frequenzanteilen im Frequenzbereich und ein weiteres Element (5) mit starker Dispersion mit im Verhältnis zum ersten Element (2) entgegengesetzten Vorzeichen umfasst.

7. System nach Anspruch 6,
wobei
das Schaltelement (4) ein von einem Signalgenerator (3) angesteuerter Modulator, insbesondere ein Mach-Zehnder, ist.

8. System nach Anspruch 6 oder 7,
wobei
das erste Element (2) und/oder das weitere Element (5) ein gechirptes Faser-Bragg Gitter oder ein Arrayed Waveguide-Gitter oder ein virtually imaged phase array oder ein 4f Linsen-Gitterpaar mit einem Flüssigkristall Modulator respektive mit einer Phasenmaske im Zentrum oder ein optisches Etalon ist.

9. System nach einem der Ansprüche 6 bis 8, wobei
der Signalgenerator ein optischer Pulsgenerator, insbesondere ein modengelockter Laser, ist, wobei das Schaltelement von einem optischen Element gebildet wird, das in der Lage ist, die Pulse des Pulsgenerators mit dem optischen Signal zu multiplizieren.

10. System nach einem der Ansprüche 6 bis 9, wobei alle Elemente auf einem Chip implementiert sind.

## Claims

1. A method for delaying a single light pulse or a packet of light pulses in a system having a waveguide,
**characterised in that**
the light pulse or the light pulses is or are exposed to an element with strong dispersion (2) for splitting the frequency portions, **in that** a frequency portion is selected and extracted and **in that** the selected frequency portion is exposed to a further element (5) with a strong dispersion of inverted sign, wherein after running through the further element, the thus-generated light pulse or the light pulses is or are a delayed copy of the original light pulse or the original light pulses.

2. The method according to Claim 1,
wherein the light pulse or the light pulses is or are transformed from the frequency range to the time range by the element with strong dispersion, wherein the frequency portion is selected in the time range.

3. The method according to Claim 1 or 2, wherein
the frequency portion is extracted in the time range by means of a switching element, particularly by means of a modulator.

4. The method according to one of the preceding claims, wherein
a tuning of the delay time is achieved by changing the electrical signal in a signal generator (3) and by displacing the window function in an element (6).

5. The method according to one of the preceding claims, wherein
the frequency portion is amplified by an optical amplifier, particularly a semiconductor optical amplifier, between a switching element (4) and the further element (5).

6. A system for carrying out the method according to one of the preceding claims, comprising a first element (2) having a strong dispersion for transforming the signal from the frequency range to the time range, a switching element (4) for cutting out frequency portions in the frequency range and a further element (5) with strong dispersion, having the opposite sign compared to the first element (2).

7. The system according to Claim 6, wherein
the switching element (4) is a modulator, particularly a Mach-Zehnder modulator, controlled by a signal generator (3).

8. The system according to Claim 6 or 7, wherein
the first element (2) and/or the further element (5) is a chirped fibre Bragg grating, or an arrayed waveguide grating, or a virtually imaged phase array, or a 4f lens grating pair having a liquid crystal modulator or having a phase mask in the centre, or an optical etalon.

9. The system according to one of Claims 6 to 8, wherein
the signal generator is an optical pulse generator, particularly a mode-locked laser, wherein the switching element is formed by an optical element, which is able to multiply the pulses of the pulse generator with the optical signal.

10. The system according to one of Claims 6 to 9, wherein
all elements are implemented on a chip.

## Revendications

1. Procédé destiné à retarder une impulsion lumineuse unique ou un paquet d'impulsions lumineuses dans un système présentant un guide d'ondes,
**caractérisé en ce que**
l'impulsion lumineuse ou les impulsions lumineuses est ou sont exposées à un élément à forte dispersion (2) pour séparer les plages de fréquence, **en ce qu'**une plage de fréquence est sélectionnée et extraite et **en ce que** la plage de fréquence sélectionnée est exposée à un autre élément (5) avec une forte dispersion de signe inversé, l'impulsion lumineuse ou les impulsions lumineuses ainsi produites étant, après passage de l'autre élément, une copie retardée de l'impulsion lumineuse initiale ou des impulsions lumineuses initiales.

2. Procédé selon la revendication 1,
l'impulsion lumineuse ou les impulsions lumineuses étant transformée(s) par l'élément à forte dispersion de la gamme de fréquences en gamme de temps, la plage de fréquence étant sélectionnée dans la gamme de temps.

3. Procédé selon la revendication 1 ou 2,
la plage de fréquence étant extraite dans la gamme de temps au moyen d'un élément de circuit, en particulier au moyen d'un modulateur.

4. Procédé selon une quelconque des revendications précédentes,
une syntonisation du temps de retard étant obtenue par une modification du signal électrique dans un générateur de signaux (3) et par un décalage de la fonction de fenêtre dans un élément (6).

5. Procédé selon une quelconque des revendications précédentes,
la plage de fréquence étant amplifiée par un amplificateur optique, en particulier un amplificateur à semi-conducteurs optique, entre un élément de circuit (4) et l'autre élément (5).

6. Système pour réaliser un procédé selon une quelconque des revendications précédentes
qui comprend un premier élément (2) à forte dispersion pour transformation du signal de la gamme de fréquences dans la gamme de temps, un élément de circuit (4) pour découper les plages de fréquence dans la gamme de fréquences et un autre élément (5) à forte dispersion avec un signe opposé par rapport au premier élément (2).

7. Système selon la revendication 6,
l'élément de circuit (4) étant un modulateur piloté par un générateur de signaux (3), en particulier un modulateur de Mach-Zehnder.

8. Système selon la revendication 6 ou 7,
le premier élément (2) et/ou l'autre élément (5) étant un réseau de Bragg sur fibre à période modulée ou un réseau sélectif planaire ou un réseau à commande de phase de représentation virtuelle ou une paire de réseaux lenticulaire 4f avec un modulateur à cristaux liquides, respectivement avec un masque de phase au centre ou un étalon optique.

9. Système selon une quelconque des revendications 6 à 8,
le générateur de signaux étant un générateur d'impulsions optique, en particulier un laser à modes bloqués, l'élément de circuit étant formé par un élément optique qui est en mesure de multiplier les impulsions des générateurs d'impulsions avec le signal optique.

10. Système selon une quelconque des revendications 6 à 9,
tous les éléments étant mis en oeuvre sur une puce.
